# EUROPEAN PATENT APPLICATION

(11) **EP 1 406 183 A2**
(43) Date of publication of application: **07.04.2004**
(21) Application number: 02026855.3
(22) Date of filing: 02.12.2002
(51) Int. Cl.: G06F 17/30

(54) **Method and system for refreshing browser pages**

(30) Priority: 01.10.2002 US 415600 P
(71) Applicant: SAP Aktiengesellschaft, 69190 Walldorf (DE)
(72) Inventor: Rössler, Andreas, 75056 Sulzfeld (DE)

(57) **Abstract**

Method and system for modifying a document object model (DOM) hierarchy in a browser. A client identifies a change of a user interface (UI) element that references a node of the DOM hierarchy. The client determines whether the change of the UI element can be applied to the DOM hierarchy by using a delta renderer. If so, the client finds in the DOM hierarchy the node that is referenced by the UI element and modifies at least one attribute related to the node according to the change by using the delta renderer. Otherwise, the client sets a dirty flag.

## Description

### Field of the Invention

The present invention generally relates to data processing and, more particularly, relates to server and client computers that communicate remotely over a network and to the operation of a browser in the client computer.

### Background of the Invention

Computers often communicate by Internet technologies. A server computer sends pages to a client computer; the pages have instructions in a markup language (e.g., HTML) and/or in a script language (e.g., JavaScript). The client computer has a Web browser that interprets the pages and thereby provides screen presentations to a user. Pages will be also referred to as user interface (UI) pages.

The appearance of the presentations changes, for example, when the user navigates through various user interface (UI) elements of the page, when the user enters data, or when the server computer updates the pages.

There are technical problems to overcome: (a) the bandwidth for server-client communication and communication speed are limited; (b) client-server roundtrips require time (client with request, server with response); (c) providing the presentations (rendering) requires time-consuming computation at the client computer if the rendering is performed by the client.

Various attempts have been made to alleviate the problems, for example, to separate information for layout (e.g., arrangement of elements on screen), style (e.g., fonts, colors), and content (e.g., text messages or pictures). The browser combines layout, style and content at the time of presentation.

However, requests from the client to the server for layout updates still involve client-server communication (in both directions, so-called roundtrips) and combining.

Applications that are built according to the generally accepted model view controller (MVC) design pattern provide views that present the model to a user. The user can interact with a view causing a corresponding controller to manipulate the model. The model then updates all of its views. A user interface (UI) page of an application can include multiple views. Typically, each view includes a couple of UI elements, such as controls or other views. The structure of the UI page can be described as a UI tree structure, where the root node of the tree represents the UI page and child nodes represent UI elements. Each node can have further child nodes.

A client computer with browser initially receives a UI page with markup language portions from a server computer. The markup language portions describe the UI elements of the UI page. The client parses the markup language portions of the UI page and builds a document object model (DOM) of the UI page. The DOM (e.g., HTML DOM) includes nodes in a DOM hierarchy that represent the UI elements of the UI page in the browser.

The browser presents a screen presentation of the UI page that corresponds to the DOM. When a request is triggered, for example, by a user interaction or an interaction with a further computer system results in a change of an UI element (e.g., a data value or the background colour of the UI element needs to be changed), typically, the whole UI page is re-rendered.

This causes unpleasant effects for the user. For example, the user has to wait until the re-rendering is finished and when the re-rendered DOM is finally presented, typically screen flickering occurs.

### Summary of the Invention

The problems are solved by method and system according to the independent claims; various embodiments of the present invention are defined by the dependent claims.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: is a simplified flow chart of a first method that can be implemented with an embodiment of the present invention;
- FIG. 2: is a simplified flow chart of a second method that can be implemented with an embodiment of the present invention; and
- FIG. 3: illustrates UI elements of a UI tree referencing nodes in a corresponding document object model.

### Detailed Description of the Invention

Persons of skill in the art can implement a computer system with server computer ("server") and client computer ("client") that are controlled by computer programs according to the invention.

An exemplary implementation of the present invention refers to known computer techniques such as model view controller (MVC), Document Object Model (DOM) and Dynamic Hypertext Markup Language (DHTML). DHTML can be used to modify the DOM (e.g., HTML DOM) to dynamically change presentations after a UI page has been received by the browser in the client . The client uses a publicly available browser that offers navigation through mouse-clicks or other form of user action.

The server can send browser compatible instructions to the client to provide a framework that enables the client to render UI elements included in the UI page. For example, these instructions can be written in a scripting language, such as Java Script or Visual Basic Script. For example, a browser that supports DHTML can use the framework to manipulate the UI page without a need for server roundtrips if the corresponding content that is needed for the manipulation is already available at the client. For example, the content can be stored in HTML-DOM cache.

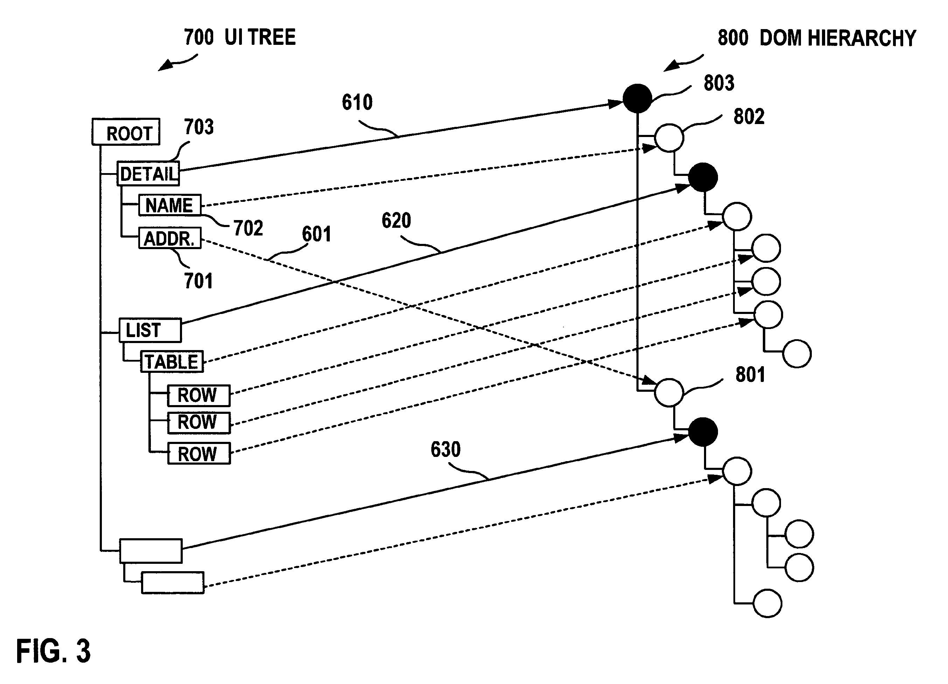

For example, the UI page includes multiple UI elements, such as a first view LIST (cf. FIG. 3) and a second view DETAIL (cf. FIG. 3) and can include further views. The LIST view includes further UI element table control TABLE to list customers. The DETAIL view includes UI elements first input field NAME and second input field ADDRESS to maintain the name and address of a customer that is selected in the table control. The UI tree (cf. FIG. 3) includes a hierarchical structure of the UI elements.

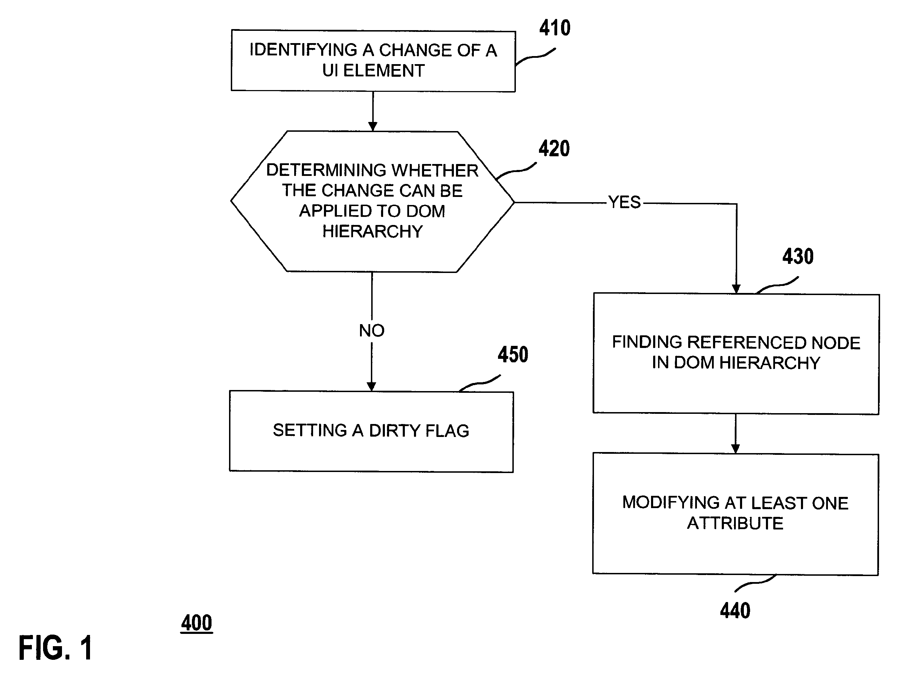

FIG. 1 is a simplified flow chart of a first method for modifying a document object model (DOM) hierarchy in a browser that can be implemented with an embodiment of the present invention.

The method 400 includes the following steps:
a) The client identifies 410 a change of a UI element 701 (cf. FIG. 3) that references 601 (cf. FIG. 3) a node 801 (cf. FIG. 3) of the DOM hierarchy 800 (cf. FIG. 3). For example, the browser recognizes that a user has modified the address in UI element 701 ADDRESS (ADDR). This changes the value of the UI element 701. Further, this may imply a change of the background color to indicate to the user that the value has been modified.
b) The client determines 420 whether the change of the UI element 701 can be applied to the DOM hierarchy 800 by using a delta renderer. The delta renderer is a set of functions that can modify the DOM representation of a UI element directly by using, for example, setter functions, such as set Value, setMaxLength, set Colour, etc. If a function is included in the delta renderer that can be used to adjust the DOM hierarchy according to the change the delta renderer can be used. In the example of FIG. 3 the UI element 701 is represented by the DOM node 801.
c) If the change can be applied by using the delta renderer, the browser finds 430 in the DOM hierarchy 300 the node 801 that is referenced 601 by the UI element 701. For example, FIG. 3 illustrates the references from views to the corresponding DOM nodes by solid arrows 610, 620 and 630. The references from controls included in the views are illustrated by dashed arrows. DOM nodes referenced by the views are illustrated by black nodes. When the referenced node is identified, the browser modifies 440 at least one attribute related to the node according to the change. For example, the value and color attributes of the node referenced by the UI element ADDRESS (ADDR) are changed by using the delta renderer. For this purpose the delta renderer can provide a corresponding setValue and setColour function. By applying the changes directly to the corresponding nodes of the DOM hierarchy a complete re-generating (re-rendering) of the changed UI element is not necessary.
   Depending on the complexity of the UI element, its DOM representation can include the node but can also include a sub-tree of the DOM hierarchy where the node is the root node of the sub-tree. In case, only the node is included, the at least one attribute (e.g., value, color) that is changed is an attribute of the node. Usually, the DOM representation includes a sub-tree. In this case, the at least one attribute can be any attribute of the node or of any sub-node of the sub-tree.
d) If the change cannot be applied by using the delta renderer, the browser sets 450 a dirty flag.

In one embodiment of the invention, the dirty flag can indicate invalidity of a cached DOM representation of the UI element. In the example of FIG. 3, the dirty flag can be set for the DOM representation of the UI element ADDRESS.

In another embodiment of the invention the dirty flag indicates invalidity of a cached DOM representation of a further UI element that is on the path of the UI element in the UI tree. In other words, the dirty flag can be set for the further UI element that is the parent of the UI element in the UI tree. It can also be set for any further UI element up to the root node of the UI tree that is on the path from the root node to the UI element. For example, instead of setting the dirty flag for the UI element ADDRESS it can be set for the view DETAIL that includes ADDRESS and other UI elements (e.g., NAME).

Method 400 can be executed by the client without a need to send data from the server to the client. Therefore, performance is improved and use of bandwidth for the client server communication is reduced.

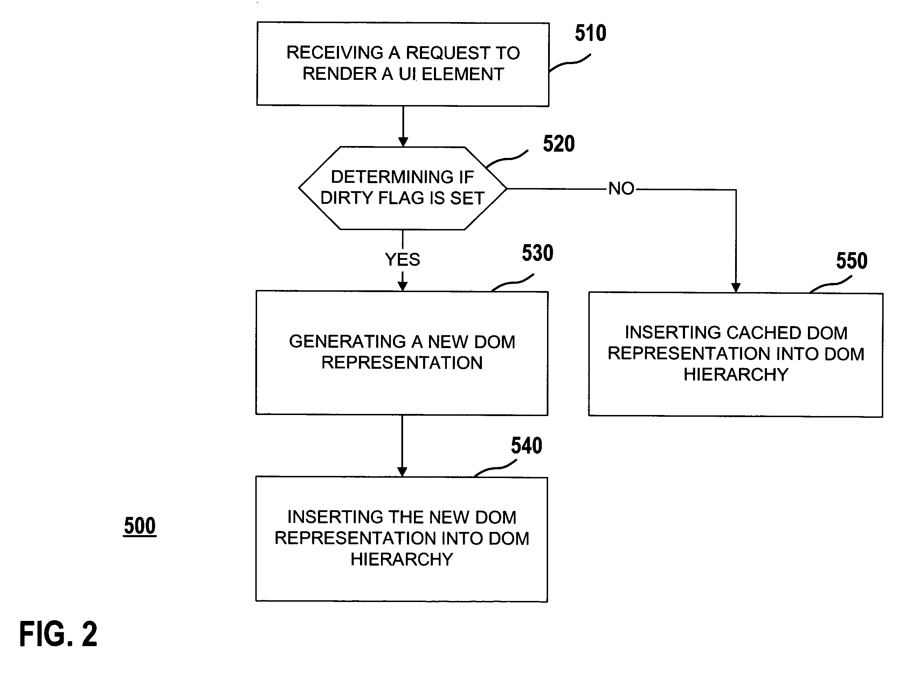

FIG. 2 is a simplified flow chart of a second method 500 for modifying a DOM hierarchy in a browser that can be implemented with an embodiment of the present invention.

The method 500 includes the following steps:
i) A client receives 510 a request to render a user interface (UI) element of a UI-tree.
ii) The client determines 520 whether a dirty flag is set for a cached DOM representation of a flagged UI element that is on the path of the UI element in the UI tree. The flagged UI element has a reference to a node of the DOM hierarchy.
   The dirty flag can be set for the UI element or for a further UI element that is on the path of the UI element in the UI tree. Dependent on where the dirty flag is set it indicates the invalidity of the cached DOM representation of the corresponding flagged UI element as described under FIG. 1. For example, the request is for rendering the UI element ADDRESS and the dirty flag is set for the cached DOM representation of the view DETAIL or for the cached DOM representation of the UI element ADDRESS. In both cases the result of the determining step 520 is that a dirty flag is set.
iii) If the dirty flag is set, the client generates 530 a new DOM representation of the flagged UI element and inserts 540 the new DOM representation into the DOM hierarchy by using the UI-tree and the corresponding reference to the node. If the flagged UI element (e.g., view DETAIL) includes further UI elements (e.g., NAME, ADDRESS), the UI tree can be used to evaluate which UI elements belong to the flagged UI element. The new DOM representation can be a new sub-tree of the DOM hierarchy where the node is the root node of the new sub-tree.
iv) If the dirty flag is not set, the client inserts 550 the cached DOM representation into the DOM hierarchy by using the UI-tree and the reference to the node. The cached DOM representation can be a cached sub-tree of the DOM hierarchy where the node is the root node of the cached sub-tree.

FIG. 3 illustrates UI elements of a UI tree 700 referencing nodes in a corresponding document object model 800 (e.g., a HTML DOM). The UI tree 700 has a root node (ROOT) which has child nodes (e.g., DETAIL, LIST). UI tree nodes correspond to UI elements. For example, the child nodes can be views (DETAIL, LIST) on a UI page. Each view can have further child nodes, such as further views or controls (e.g., ADDRESS, NAME, TABLE, ROW). Each UI element references (solid and dashed arrows) a node in the DOM hierarchy. the referenced nodes can have sub-trees.

## Claims

1. A method (400) for modifying a document object model (DOM) hierarchy in a browser comprising the steps:
identifying (410) a change of a user interface (UI) element that references a node of the DOM hierarchy;
determining (420) whether the change of the UI element can be applied to the DOM hierarchy by using a delta renderer;
if the change can be applied by using the delta renderer, finding (430) in the DOM hierarchy the node that is referenced by the UI element and modifying (440) at least one attribute related to the node according to the change by using the delta renderer; and
else, setting (450) a dirty flag.

2. The method (400) of claim 1, wherein the dirty flag indicates invalidity of a cached DOM representation of the UI element.

3. The method (400) of claim 1, wherein the dirty flag indicates invalidity of a cached DOM representation of a further UI element that is on the path of the UI element in the UI tree.

4. The method (400) of any of the claims 2 to 3, wherein the cached DOM representation comprises the node and the at least one attribute is an attribute of the node.

5. The method (400) of any of the claims 2 to 3, wherein the cached DOM representation comprises a sub-tree of the DOM hierarchy and the node is the root node of the sub-tree and the at least one attribute is an attribute of a sub-node of the sub-tree.

6. A method (500) for modifying a document object model (DOM) hierarchy in a browser comprising the steps:
receiving (510) a request to render a user interface (UI) element of a UI-tree;;
determining (520) whether a dirty flag is set for a cached DOM representation of a flagged UI element that is on the path of the UI element in the UI tree; the flagged UI element having a reference to a node of the DOM hierarchy;
if the dirty flag is set, generating (530) a new DOM representation of the flagged UI element and inserting (540) the new DOM representation into the DOM hierarchy by using the UI-tree and the reference to the node; and
else, inserting (550) the cached DOM representation into the DOM hierarchy by using the UI-tree and the reference to the node.

7. The method (500) of claim 7, wherein the cached DOM representation is a cached sub-tree of the DOM hierarchy and the node is the root node of the cached sub-tree.

8. The method (500) of claim 7, wherein the new DOM representation is a new sub-tree of the DOM hierarchy and the node is the root node of the new sub-tree.

9. A computer program product comprising instructions that when loaded into a memory of a computer system cause at least one processor of the computer system to perform the steps according to any one of the claims 1 to 5.

10. A computer program product comprising instructions that when loaded into a memory of a computer system cause at least one processor of the computer system to perform the steps according to any one of the claims 6 to 9.

11. A computer system for modifying a document object model (DOM) hierarchy of a client comprising:
a browser to identify (410) a change of a user interface (UI) element that references a node of the DOM hierarchy; and to determine (420) whether the change of the UI element can be applied to the DOM hierarchy by a delta renderer; and to set a dirty flag when the change cannot be applied by the delta renderer; and
the delta renderer to find in the DOM hierarchy the node that is referenced by the UI element; and to modify (440) at least one attribute related to the node according to the change.

12. The computer system of claim 11, where the delta renderer comprises a set of functions that can modify a corresponding DOM representation of the UI element.

13. The computer system of claim 12, where the set of functions comprises setter functions.

14. The computer system of any one of the claims 11 to 13, wherein the dirty flag indicates invalidity of a cached DOM representation of the UI element.

15. The computer system of any one of the claims 11 to 13, wherein the dirty flag indicates invalidity of a cached DOM representation of a further UI element that is on the path of the UI element in the UI tree.

16. The computer system of any one of the claims 14 to 15, wherein the cached DOM representation comprises the node and the at least one attribute is an attribute of the node.

17. The computer system of any one of the claims 14 to 15, wherein the cached DOM representation comprises a sub-tree of the DOM hierarchy and the node is the root node of the sub-tree and the at least one attribute is an attribute of a sub-node of the sub-tree.

18. A computer system for modifying a document object model (DOM) hierarchy of a client comprising:
means for receiving (510) a request to render a user interface (UI) element of a UI-tree;
means for determining (520) whether a dirty flag is set for a cached DOM representation of a flagged UI element that is on the path of the UI element in the UI tree; the flagged UI element having a reference to a node of the DOM hierarchy;
means for generating (530) a new DOM representation of the flagged UI element and inserting (540) the new DOM representation into the DOM hierarchy by using the UI-tree and the reference to the node if the dirty flag is set; and
means for inserting (550) the cached DOM representation into the DOM hierarchy by using the UI-tree and the reference to the node if the dirty flag is not set.

19. The computer system of claim 18, wherein the cached DOM representation is a cached sub-tree of the DOM hierarchy and the node is the root node of the cached sub-tree.

20. The method (500) of claim 18, wherein the new DOM representation is a new sub-tree of the DOM hierarchy and the node is the root node of the new sub-tree.
